# EUROPÄISCHE PATENTSCHRIFT

(11) **EP 3 649 983 B1**
(45) Veröffentlichungstag und Bekanntmachung des Hinweises auf die Patenterteilung: **20.04.2022**
(21) Anmeldenummer: 18205735.6
(22) Anmeldetag: 12.11.2018
(51) Int. Cl.: A61C 13/00, A61C 13/08, A61C 13/34, A61C 13/20, A61C 13/01, A61C 13/36, B33Y 80/00

(54) **DENTALPROTHESEN-HERSTELLVERFAHREN**
DENTAL PROSTHESIS PRODUCTION METHOD
PROCÉDÉ DE FABRICATION DE PROTHÈSES DENTAIRES

(43) Veröffentlichungstag der Anmeldung: 13.05.2020
(73) Patentinhaber: Ivoclar Vivadent AG, 9494 Schaan (LI)
(72) Erfinder: Häfele, Clemens Andreas, 6837 Weiler (AT); Hagenbuch, Konrad, 9469 Haag (CH); Frei, Roger, 9436 Balgach (CH); Schülke, Andreas, 9472 Grabs (CH)
(74) Vertreter: Baronetzky, Klaus

(56) Entgegenhaltungen:
- WO-A1-2018/069317
- WO-A1-2018/102862
- DE-A1-102013 003 913
- US-A1- 2016 100 917

## Beschreibung

Die Erfindung betrifft ein Dentalprothesen-Herstellverfahren, gemäß dem Oberbegriff von Anspruch 1.

Derartige Herstellverfahren sind seit langem bekannt, wie z.B. aus DE102013003913 A1. Beim Verfahren in DE102013003913 A1 wird auf der Basis eines digitalen Datensatzes zunächst ein Wachsprovisorium mit entsprechenden Aufnahmeausnehmungen für die künstlichen Zähne hergestellt. In einer bevorzugten Variante erfolgt die Herstellung des Wachsprovisoriums mit einem generativen Verfahren.

Typischerweise erfolgt die Herstellung so, dass zunächst der Mund des Patienten gescannt wird und über eine CAD/CAM-Software ein virtuelles Modell für die Dentalprothese erstellt wird.

Alternativ kann auch in klassischer Weise abgeformt werden, und die Abformung dann gescannt werden.

Die Dentalprothese kann hierbei sowohl eine Vollprothese als auch eine Teilprothese sein.

In einem ersten Verfahren wird das virtuelle Modell so in die Realität umgesetzt, dass passende Konfektionszähne ausgewählt werden und eine Prothesenbasis in gefräster Form hergestellt wird.

Im nächsten Schritt dieses Verfahrens werden die Zähne nun probeweise aufgestellt, und gegebenenfalls bestehende okklusale Fehlstellen werden beseitigt.

Die Aufstellung kann auch virtuell erfolgen, und damit sichergestellt werden, dass keine Nacharbeitung erforderlich ist, oder höchstens eine solche wie eine Politur.

In einem bereits aus Kostengründen verbreiteten anderen Verfahren erfolgt eine Modellation der Prothese in Wachs. Das Wachsmodell wird vergossen, beispielsweise mit Gips oder einem ähnlichen Material.

Die ausgehärtete Gipsform, die Muffel, wird thermisch behandelt, um das aus Wachs bestehende Positivmodell zu entfernen. Hierbei ist unter "entfernen" eine beliebige Art des Entfernens zu verstehen, also beispielsweise Ausbrühen, Auflösen, Ausbrennen usw.

Es entsteht eine verlorene Form, die dann mit Prothesen-Rohmaterial, beispielsweise PMMA-MMA-Mischungen, ausgegossen wird.

Eine vorteilhafte Ausgestaltung für die Bereitstellung einer Form ist das Ivobase-Verfahren, das mit einer Küvette arbeitet. Das Verfahren injiziert die Reaktionsmasse unter Druck und hält diesen während des Polymerisationsprozesses, der durch ein detailierte Temperatursteuerung gestartet und gesteuert wird, aufrecht. Dadurch erfolgt vorne zu eine Kompensation des auftretenden Polymerisationsschrumpfes und das erhaltene Werkstück weicht deutlich weniger von der vorhandenen Negativ-Form ab, als dies bei er konventionellen Herstellung der Fall ist.

Die bislang bekannten Verfahren erfordern entweder ein erhebliches Maß an manueller Arbeit, die lediglich teilweise durch Computerhilfe unterstützt werden kann, wie die Modellherstellung.

Zum anderen erfordern sie erhebliche Investitionen für die Beschaffung einer CAM-Vorrichtung mit der zugehörigen Fräsmaschine, wobei die Investitionen im deutlich fünfstelligen Euro-Bereich liegen.

Konventionelle, abtragende Verfahren zur Herstellung von Prothesen greifen entweder auf konfektionierte Zähne oder auf Rohlinge aus Zahnmaterial (Scheiben) zurück. Erstere haben die Problematik einer festgelegten Form und Grösse, was eine entsprechende Lagerhaltung und Einschränkung der Individualisierbarkeit nach sich zieht. Mit der Verwendung von Zahnmaterial-Scheiben muss zusätzlich zur oftmals teuren Prothesenbasismaterial-Scheibe noch eine weitere Scheibe gekauft und bearbeitet werden.

Um die Kosten wenigstens in gewissem Maße zu reduzieren, ist es auch bereits vorgeschlagen worden, sowohl die Zähne, die gemeinsam einen Zahnbogen oder bei Teilprothesen mindestens einen Teilzahnbogen bilden, als auch die Prothesenbasis aus einem gemeinsamen Rohling, der sowohl fleischfarbenes als auch zahnfarbenes Material aufweist, herzustellen.

Hierzu wird die Rohling-Scheibe in geeigneter Weise gefräst, wie es aus der EP 3 064 170 A1 bekannt geworden ist.

Demgegenüber liegt der Erfindung die Aufgabe zugrunde, ein Dentalprothesenherstellverfahren gemäß dem Oberbegriff von Anspruch 1 zu schaffen, das einfach zu realisieren und preisgünstig durchzuführen ist.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass das vorstehend genannte Positivmodell für Erzeugung einer Dentalprothese durch 3D-Druck erzeugt wird. Bevorzugt erfolgt das 3D-Drucken des Zahnbogens, der auch als Zahnkranz bezeichnet werden kann, und der Prothesenbasis separat.

Erfindungsgemäß ist so die Verwendung preisgünstiger Materialien möglich, und auch die rasche Erzeugung der Positiv-Modelle ohne manuelle Nachbearbeitung.

Erfindungsgemäß günstig ist es, wenn die beiden Materialien nach dem Ivobase-Verfahren in eine Küvette injiziert werden.

Das Basis-Positivmodell wird entfernt und der so entstandene Freiraum mit Basismaterial durch Injizieren aufgefüllt.

Erfindungsgemäß wird zunächst die Basis durch Injizieren erzeugt, und dann das Zahnkranz-Positivmodell auf der Basis angebracht und mit dieser gemeinsam eingebettet.

Das Zahnkranz-Positivmodell wird entfernt und der so entstandene Freiraum mit Zahnmaterial durch Injizieren aufgefüllt.

In einer besonders günstigen Ausgestaltung ist es vorgesehen, dass das Positivmodell, sobald es fertig durch 3D-Druck erzeugt ist, auch bereits für die Einprobe beim Patienten verwendet wird.

Durch diesen Schritt lässt sich erheblich Arbeit und Zeit sparen, und das Positivmodell hat zudem erstmals eine Doppelfunktion.

Als 3D-Drucker kommen beliebige geeignete Ausgestaltungen mit ausreichender Präzision in Betracht. Kostengünstige Lösungen sind bevorzugt, wie beispielsweise FDM.

Besonders günstig ist es auch, dass in vielen zahntechnischen Laboren bereits vorhandene Ivobase-Injektoren ohne weiteres weiter verwendet werden können.

Der Zahnarzt benötigt lediglich einen preisgünstigen 3D-Drucker für beispielsweise 1000 bis 2000 €.

Günstig ist es auch, dass die Mund-Situation des Patienten sowohl nach statischen als auch nach gnathologischen Gesichtspunkten berücksichtigt werden kann. Dies stellt einen erheblichen Fortschritt gegenüber der Verwendung von Konfektionszähnen dar, die stets Kompromisse hinsichtlich der Formgebung eingehen müssen.

Dies gilt in besonderem Maße für Teilprothesen, die eine Anpassung an bestehende Zähne des Patienten erfordern.

Erfindungsgemäß ist es günstig, dass trotz der Verwendung des Ivobase-Injector-Systems die Vorteile digitaler Techniken ausgenutzt werden können. Es ist ein CAD-Design sowohl der Prothesenbasis als auch der Zähne möglich, bei Bedarf auch mit Autokorrektur.

Es ist auch möglich, eine zusätzliche integrierte Schrumpfkompensation vorzusehen, indem die Positivmodelle mit einem entsprechenden Übermaß gefertigt werden, um noch eine bessere Präzision zu erreichen.

Noch besser ist, während der Injektion den Injektionsdruck so lange aufrechtzuerhalten, bis der Schrumpf kompensiert ist.

Erfindungsgemäß günstig ist es ferner, dass die Prothesenbasis und die Zahnbögen aus PMMA gefertigt werden können, so dass eine niedrige Affinität für Plaque besteht, die Mundbeständigkeit gut ist und die Zähne nicht zu Verfärbungen neigen. Des Weiteren ist der Verbund zwischen den zwei gespritzten Materialien dann ausgezeichnet.

Erfindungsgemäß ist insofern ein teilautomatisierter Spritzgussprozess mit einer guten Ästhetik vorgesehen. Im Vergleich zu abtragenden Prozessen wird erheblich weniger Material benötigt, und die Investitionskosten sind deutlich geringer. Die Lagerhaltung von Prothesenzähnen in mannigfaltigen Grössen und Formen entfällt, durch die Verwendung (weniger) zahnfarbener Systemkapseln.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1a und 1b: eine schematische Darstellung eines Ivobase-Injektors zur Durchführung des erfindungsgemäßen Verfahrens; und
- Fig. 2a, 2b und 2c: ein Ablaufdiagramm zur Erläuterung des erfindungsgemäßen Verfahrens in einer Ausführungsform.

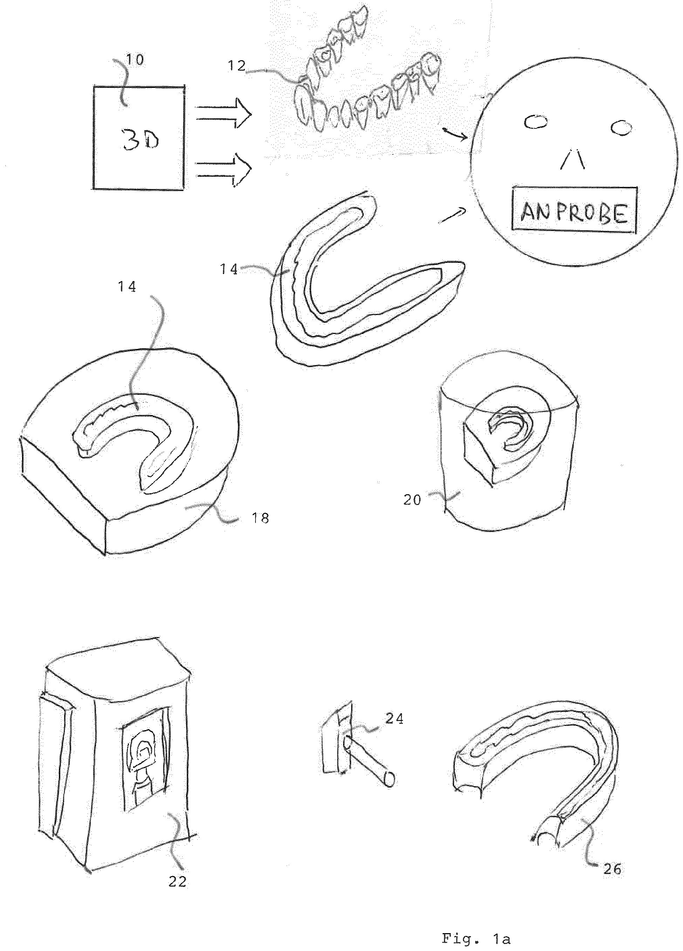

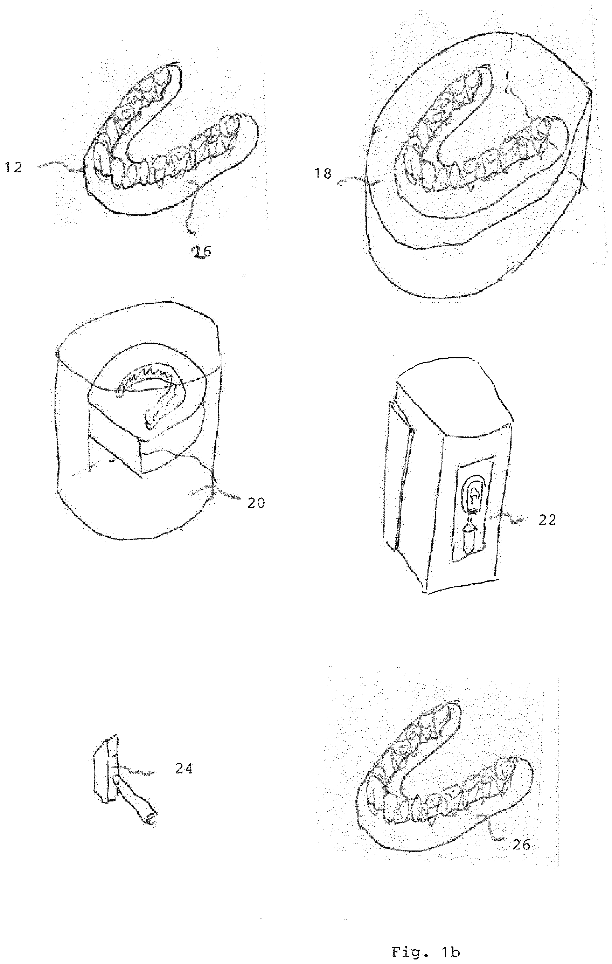

Die technischen Voraussetzung für die Erfindung sind in den Fig. 1a und 1b in einer Ausführungsform der Erfindung schematisch dargestellt.

Es ist ein 3D-Drucker 10 vorgesehen, mit dem nach Vorgabe ein Zahnkranz 12 und eine Prothesenbasis 14 aus preisgünstigem 3D-Druck Material als Positivmodelle erzeugt werden. Der Zahnkranz wird auch als Zahnbogen bezeichnet.

Bei Bedarf lassen sich diese beiden Positivmodelle kurzerhand zusammenfügen und für eine Anprobe am Patienten verwenden. Dieser Schritt kann aber auch entfallen.

Nachfolgend wird eine der beiden Möglichkeiten hinsichtlich der Reihenfolge der Handhabung beschreiben, nämlich die Erzeugung der Basis 14 als erstes.

Es versteht sich, dass anstelle dessen in entsprechender Weise auch der Zahnkranz 12 zuerst erzeugt werden kann.

In diesem Ausführungsbeispiel wird zunächst die Prothesenbasis erzeugt. Hierzu wird das Prothesenbasismodell 14 in eine Küvette 18 eingelegt und mit einer geeigneten Negativformerstellungsmaterial, also einer Vergussmasse wie Silikon oder Gips, vergossen.

Nach Erhärten der Vergussmasse wird die Vergussmasse samt dem Positivmodell in einen Brühtopf 20 eingelegt und das Positivmodell entfernt.

Damit verbleibt eine Negativform. Die Negativform wird nun erneut in die Küvette 18 eingelegt, sofern sie nicht bereits in dieser ist.

Die Küvette 18 wird nun in an sich bekannter Weise in einem Injektor wie beispielsweise den Injektor IvoBase der Firma Ivoclar Vivadent AG eingelegt.

Es wird Prothesenbasis-Material bereitgestellt und in die Küvette injiziert. Das Prothesenbasis-Material wird unter Druck gesetzt und gelangt hierdurch in den Hohlraum der Negativform, der dem Prothesenbasis-Positivmodell entspricht.

Bevorzugt wird der Injektionsdruck zunächst in mäßiger Höhe ausgeübt und hieran anschließend auf den vollen Wert erhöht.

Die Negativform füllt sich mit Prothesenbasis-Material, wobei dafür Sorge getragen wird, dass die dort vorhandene Luft an der gegenüberliegenden Seite entweichen kann, ohne dass Basismaterial verloren geht.

Unter Aufrechterhaltung des Injektionsdruck wird die für die Polymerisation erforderliche Wärme zugeführt, und Druck und Wärme werden für die Injektionszeit gehalten. Sobald die Polymerisation abgeschlossen ist, wird der Druck kontinuierlich reduziert und die Temperatur ebenso.

Es versteht sich, das die Küvette 18 so bemessen ist, dass sie dem Injektionsdruck standhalten kann. Bevorzugt ist die Küvette zweiteilig aufgebaut und hat dementsprechend eine Oberseite und eine Unterseite, die im wesentlichen parallel zur Ocklusionsebene sind.

Die beiden Hälften der Küvette werden mit dem Injektionsdruck mit einer Kraft zusammen gedrückt, die den Injektionsdruck übersteigt, also beispielsweise mit 10000 N.

Je nach verwendetem Dentalrestaurationsmaterial kann der gesamte Injektionsprozess beispielsweise eine Stunde dauern, aber auch mehr oder weniger.

Nach dem Abkühlen wird die Vergussform, also die ausgehärtete Vergussmasse, mit einem geeigneten Schlaginstrument 24 entfernt.

Die Prothesenbasis ist insofern bereits aus Prothesenbasis-Material fertiggestellt.

Zu diesem Zeitpunkt wird das Positivmodell des Zahnbogens 12 mit der fertigen Prothesenbasis 26 zusammengefügt.

Erfindungsgemäß ist insofern zu diesem Zeitpunkt ein Hybridmodell aus einem Dentalrestaurationsteil (nämlich der Prothesenbasis) und einem Positivmodell realisiert.

Die Kombination aus Prothesenbasis 26 und Zahnbogen-Positivmodell 12 wird nun in die gereinigte und neu bereitgestellte Küvette 18 eingelegt und erneut mit einer geeigneten Vergussmasse vergossen, wobei wiederum beispielsweise Gips oder Silikon zum Einsatz gelangen können.

Nach Erhärten der Vergussmasse wird in dem Brühtopf 20 oder einer beliebigen anderen geeigneten Entfernvorrichtung das Positivmodell des Zahnbogens verflüssigt und insofern entfernt.

Hierbei ist die Temperatur so zu wählen, dass sie oberhalb der Schmelztemperatur des Positivsmodells, jedoch unterhalb der Erweichungstemperatur der Prothesenbasis 26 liegt.

In diesem Zustand besteht insofern eine Negativform für den Zahnbogen, bestehend aus der Vergussmasse und der Prothesenbasis 26.

Diese Negativform wird nun erneut in den Injektor 22 eingesetzt, und es wird Zahnbogenmaterial injiziert, in der gleichen Weise wie zuvor beschreiben, jedoch angepasst an das Material.

Dieser Schritt kann auch zweiteilig aufgebaut sein, indem zunächst Dentinmasse und dann Schneidemasse injiziert wird, in sinngemäßer Abfolge. Bei dieser mehrteiligen Lösung ist das Zahnbogenmodell in ein Dentin-Positivmodell und ein Schneidemassen-Positivmodell ausgeteilt.

Nach Aufbauen des Injektionsdrucks und Erwärmen, während der Injektionsdruck gehalten wird, wird die Polymerisation durchgeführt, in der gleichen Weise wie zuvor beschrieben.

Hieran anschließend wird abgekühlt, und die Vergussmasse wird von der fertigen Prothese entfernt, beispielsweise ebenfalls mittels eines Schlaginstrument 24.

Die fertige Prothese wird dann typischerweise nach bearbeitet, also gereinigt, insbesondere in den Zahnzwischenräumen, und poliert.

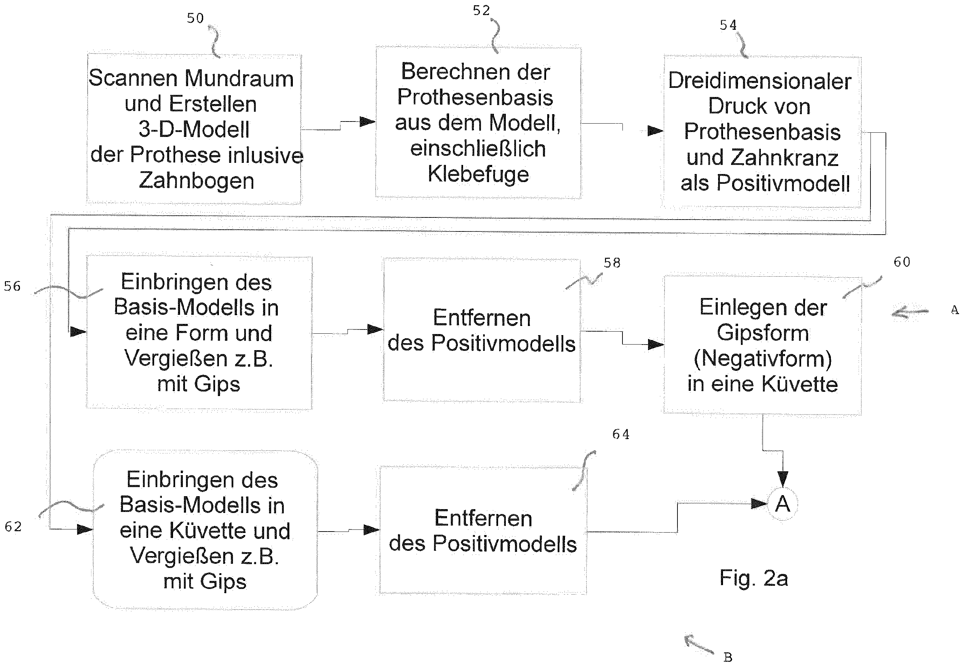

Die hier beschriebenen Verfahrensschritte sind in den Fig. 2a bis 2c in einer leicht modifizierten Ausgestaltung des Verfahrens in Form eines Flussdiagramms dargestellt.

Im Schritt 50 wird ein Scan der Mundraums erstellt und es wird ein 3D-Modell der Prothese inklusive Zahnbogen erstellt.

Im Schritt 52 wird die Prothesenbasis aus dem Modell berechnet, einschließlich der Klebefuge. Es wird also die erwünschte Trennlinie zwischen dem Zahnbogen und der Prothesenbasis festgelegt.

Es versteht sich, das anstelledessen auch in klassischer Weise eine Abformung mit Abformmaterial erfolgen kann, und der so hergestellte Abdruck gescannt werden kann. Hierdurch lässt sich die Verwendung vom Intraoralscannern und die gegebenenfalls bestehende Ungenauigkeit durch Patientenbewegung und so weiter vermeiden.

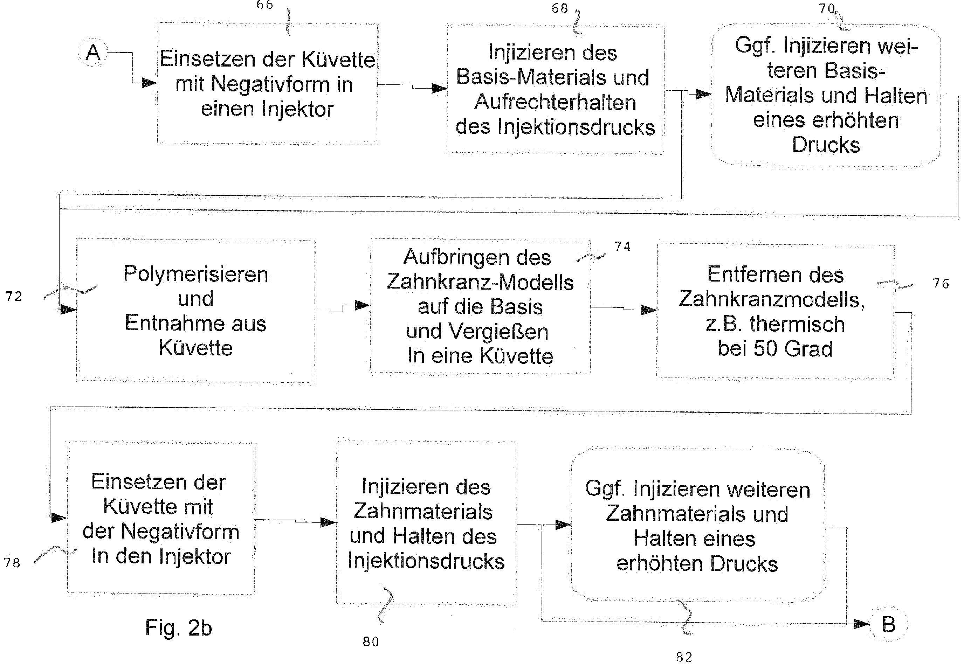

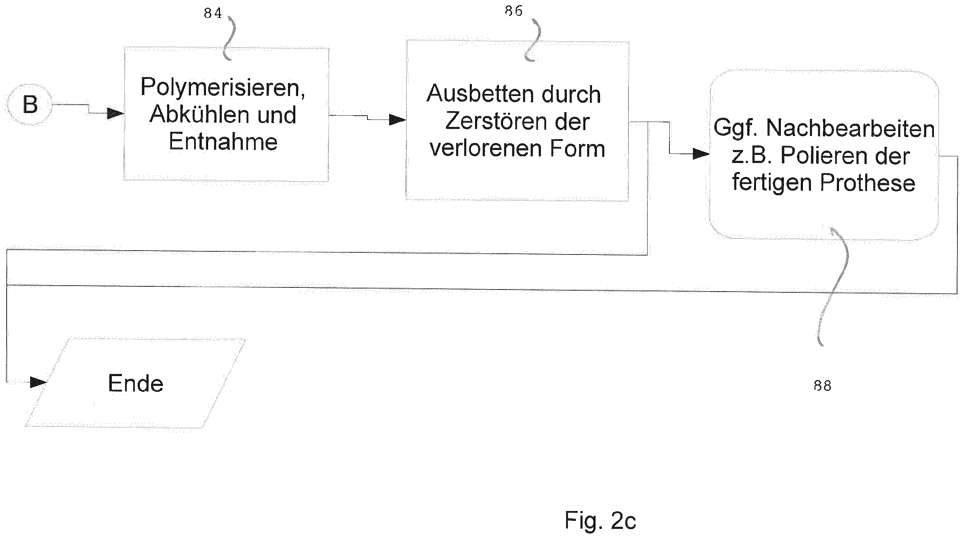

In der Ausführungsform gemäß der Fig. 2 werden in Schritt 54 die Prothesenbasis und der Zahnkranz als Positivmodell dreidimensional gedruckt. Hierbei kann ein an sich bekannter preisgünstiger 3D-Drucker zum Einsatz gelangen.

Das Prothesenbasismodell wird nun gemäß der Alternative A in eine Form eingelegt und mit Gips vergossen. Alternativ kann auch mit Silikon vergossen werden. Dies geschieht im Schritt 56.

Das Positivmodell wird in Schritt 58 in der Variante A entfernt, beispielsweise durch ausbrühen.

Die Gipsform oder Silikonform wird im Schritt 60 in eine Küvette eingelegt.

Alternativ zu den Schritten 56 bis 60 kann auch gemäß Alternative B das Basismodell in eine Küvette eingebracht werden und diese mit Silikon oder Gips vergossen werden, gemäß Schritt 62.

Dann wird gemäß Schritt 64 das Positivmodell entfernt, beispielsweise durch thermische Behandlung.

Mit den Schritten 60 beziehungsweise 64 enden die beiden Alternativen A und B, und wie in Fig. 2 b wird im nächsten Schritt 66 in beiden Fällen die Küvette mit der Negativform in einen Injektor 22 eingesetzt.

Das Basismaterial wird im Schritt 68 injiziert und unter Aufrechterhaltung des Injektionsdrucks wird die Küvette im Injektor 22 erwärmt.

Im Schritt 70 erfolgt ein Nachverpressen und Injizieren weiteren Basismaterials, wodurch gegebenenfalls bestehende Luftbläschen entfernt beziehungsweise abgeschieden werden und sichergestellt wird, dass es nicht später zum Materialschrumpf kommt.

Das Vergussmaterial wird entfernt, so dass die fertige Prothesenbasis 26 frei liegt. Sie wird bei Bedarf noch gereinigt.

Nach dem Polymerisieren im Schritt 72 wird die Küvette samt ihrem Inhalt aus dem

Injektor entnommen. Die Küvette kühlt ab und das im Schritt 54 erzeugte Zahnkranzmodell 12 wird im Schritt 74 auf die bestehende Prothesenbasis 26 aufgebracht. Die Kombination aus dem Positivmodell des Zahnkranzes und der fertigen Prothesenbasis 26 wird erneut vergossen.

Im Schritt 76 wird das Zahnkranzmodell entfernt, beispielsweise durch thermische Behandlung bei 50 Grad. Bei dieser Temperatur schmilzt oder erweicht die Prothesenbasis noch nicht, so dass die bestehende Negativform sich zwischen der fertigen Prothesenbasis und der Vergussmasse, die das Positivmodell des Zahnkranzes über umgeben hat, erstreckt.

Die Küvette wird in diesem Zustand im Schritt 78 erneut in den Injektor eingesetzt, und es wird Zahnmaterial im Schritt 80 in den bestehenden Hohlraum des Zahnbogens oder Zahnkranzes injiziert.

Der Injektionsdruck wird aufrechterhalten und es erfolgt die thermische Behandlung, bis im Schritt 82 sämtliche Hohlräume gefüllt sind, so dass im Schritt 84 polymerisiert werden kann.

In an sich bekannter Weise erfolgt Abkühlen und Entnahme der Küvette aus dem Injektor.

Es erfolgt ein Ausbetten, beispielsweise mit dem Schlaginstrument 24, im Schritt 86. In Schritt 88 erfolgt ein Nachbearbeiten zum Beispiel durch Polieren. Die Prothese ist damit fertiggestellt.

Während hier wiederum die Ausführungsform mit der Erstellungen der Basis als erstes realisiert ist, versteht es sich, dass anstelledessen - gemäß einer nicht beanspruchten Vorgehensweise - der Zahnbogen oder -kranz zuerst erzeugt werden kann. Dann wird in Schritt 56 das Zahnkranzmodell anstelle des Basismodells verwendet, und dieses zuerst in den folgenden Schritten verwendet.

Es versteht sich, dass ohne weiteres zahlreiche Alternativen beim erfindungsgemäßen Verfahren realisiert werden können. Beispielsweise könnte auch in einem Drucktopf eine mechanische Pressung stattfinden, und dann die Polymerisation wie zuvor beschrieben vollzogen werden.

Für das 3D-Drucken können beliebige Rapid-Prototyping-Verfahren alternativ verwendet werden. Beispielsweise wäre die Realisierung von Thermoplasten über FDM preisgünstig möglich. Alternativ könnten wasserlösliche Materialien verwendet werden, die dann in den Entfernungs-Schritten 58, 64 und 76 durch Wasser aufgelöst werden könnten.

Für die Vergussmasse kommen beliebige geeignete Materialien in Betracht, wobei eigentlich gipsfreie Materialien bevorzugt sind. Infrage kämen auch aushärtende Schäume aus Polyuretan. Silikone sind ebenfalls möglich, jedoch vergleichsweise teuer.

## Patentansprüche

1. Dentalprothesen-Herstellverfahren, wobei die Dentalprothese eine Vollprothese oder eine Teilprothese ist und die Dentalprothese eine Basis (26) und einen Zahnkranz beinhaltet, wobei ein Positivmodell (14) der herzustellenden Basis additiv erzeugt wird, dann das Positivmodell der herzustellenden Basis mit einer aushärtenden Vergussmasse, insbesondere Gips, umgossen wird, wobei in einem weiteren Schritt nach Aushärten der Vergussmasse das Positivmodell der herzustellenden Basis entfernt wird, insbesondere durch Wärmeeinwirkung entfernt wird, so dass eine Negativform der herzustellenden Basis verbleibt, und wobei die so erstellte Negativform der Basis mit Prothesenbasis-Material gefüllt und das Prothesenbasis-Material ausgehärtet wird, wobei je ein Positivmodell (12, 14) für den Zahnkranz und die Basis durch 3D-Druck erzeugt wird unc insbesondere danach, die Basis (26), insbesondere durch Injizieren, erzeugt wird, wobei dann das Zahnkranz-Positivmodell (12) auf die Basis (26) aufgebracht und mit dieser gemeinsam in einer aushärtenden Vergussmasse eingebettet wird, und in einem weiteren Schritt nach Aushärten der Vergussmasse dann das Zahnkranz-Positivmodell (12) entfernt wird, so dass eine Negativform des herzustellenden Zahnkranzes entsteht und die so entstandene Negativform des herzustellenden Zahnkranzes mit Zahnkranz-Material durch Injizieren aufgefüllt wird.

2. Dentalprothesen-Herstellverfahren nach Anspruch 1, **dadurch gekennzeichnet, dass** die Herstellung der Dentalprothese in mindestens zwei Schritten vorgenommen wird, wobei in einem Schritt ein Positivmodell (14) der Prothesenbasis per 3D-Druck erzeugt wird, mit Gießmaterial zur Bildung einer Gießform vergossen wird, die Gießform ausgebrüht wird, und in die so erzeugte Gießform Prothesenbasis-Material eingespritzt wird.

3. Dentalprothesen-Herstellverfahren nach Anspruch 1 oder 2, **dadurch gekennzeichnet, dass** die Herstellung der Dentalprothese in mindestens zwei Schritten vorgenommen wird, wobei in einem Schritt ein Positivmodell (12) des Zahnkranzes per 3D-Druck erzeugt wird, mit Gießmaterial zur Bildung einer Gießform vergossen wird, eine Gießform ausgebrüht wird, und in die so erzeugte Gießform Zahnkranz-Material eingespritzt wird.

4. Dentalprothesen-Herstellverfahren nach einem der vorhergehenden Ansprüche, **dadurch gekennzeichnet**, das in einem anderen Schritt ein Positivmodell des für die Prothese benötigten Zahnkranz additiv erstellt wird, auf die davor hergestellte Prothesenbasis (26) aufgesetzt wird, vergossen wird, eine ausgehärtete Gießform entfernt wird und die so entstandene - negative Gießform für den Zahnkranz mindestens als Teil der Negativform für das Einspritzen des Zahnkranzes verwendet wird, wobei insbesondere das Einspritzen in 2 Schritten erfolgt so dass erst Dentinmasse und dann Schneidenmasse eingespritzt wird.

5. Dentalprothesen-Herstellverfahren nach Anspruch 4, **dadurch gekennzeichnet, dass** ein weiterer Teil der Negativform für das Einspritzen des Zahnkranzes ein gingivaler i Teil der fertig gespritzten Prothesenbasis (26) ist.

6. Dentalprothesen-Herstellverfahren nach einem der vorhergehenden Ansprüche, **dadurch gekennzeichnet, dass** ein Ausbetten der Prothesenbasis (26) zusammen mit einem Ausbetten der Zähne oder des Zahnkranzes erfolgt, nachdem Prothesenbasis und Zahnkranz aneinander polymerisiert sind, oder dass diese miteinander verklebt werden .

7. Dentalprothesen-Herstellverfahren nach einem der vorhergehenden Ansprüche, **dadurch gekennzeichnet, dass** ein Positivmodell aus einem formstabilen, 3D-Druck-Material, hergestellt ist, insbesondere aus Mono(meth)acrylaten oder Di(meth)acrylaten die in einem Stereolithographie-Gerät oder einem MJM-Gerät verarbeitet werden können und insbesondere gut entfernbar sind.

8. Dentalprothesen-Herstellverfahren nach einem der vorhergehenden Ansprüche, **dadurch gekennzeichnet, dass** ein Positivmodell aus Wachs oder Thermoplaste in einem 3D-Drucker (z.B. FDM-Typ, Stereolithographie-Drucker oder gemäß dem MJM-Verfahren) hergestellt ist und/oder mit einem FDM-Filament-Drucker hergestellt ist und als Kunststoffmaterial Polylactide, PP, PE, ABS, PETG und/oder gefüllte Filamente eingesetzt sind.

9. Dentalprothesen-Herstellverfahren nach einem der folgenden Ansprüche, **dadurch gekennzeichnet, dass** das Einspritzen des Prothesen-Materials, des Prothesenbasis-Materials und/oder des Zahnkranz-Materials über einen Injektor erfolgt, oder einer anderen Spritzgießvorrichtung, die einen Luftauslass aufweist, der sich beim Auftreffen des Materials automatisch schließt.

10. Dentalprothesen-Herstellverfahren nach einem der vorhergehenden Ansprüche, **dadurch gekennzeichnet, dass** ein Zahnkranz-Material mit Präpolymer-Füllstoffen, anorganischen Füllstoffen oder anorganisch gefüllten Polymerfüllstoffen gefüllt ist.

## Claims

1. A dental prosthesis manufacturing method, wherein the dental prosthesis is a full prosthesis or a partial prosthesis and the dental prosthesis includes a base (26) and a dental arch, wherein a positive model (14) of the base to be produced is additively produced, the positive model of the base to be produced is subsequently cast around using a hardening casting compound, in particular plaster, wherein, in another step following curing of the casting compound, the positive model of the base to be produced is removed, in particular by the action of heat, so that a negative mold of the base to be produced remains, and wherein the negative mold of the base thus produced is filled with denture base material and the denture base material is cured, wherein each one of a positive model for the dental arch and the base is produced by 3D printing and, in particular subsequently, the base (26) is produced, in particular by injection;
wherein the positive model (12) of the dental arch is subsequently applied to the base (26) and is embedded together therewith into a hardening casting compound, and in another step following curing of the casting compound, the positive model (12) of the dental arch is then removed so that a negative mold of the dental arch to be produced is produced and the negative mold of the dental arch thus formed and to be produced is filled with dental arch material by injection.

2. The dental prosthesis manufacturing method according to claim 1, **characterized in that** the dental prosthesis is manufactured in at least two steps, wherein, in one step, a positive model (14) of the prosthesis base is generated by 3D printing, is cast with casting material to form a casting mold, the casting mold is boiled off, and prosthesis base material is injected into the casting mold thus generated.

3. The dental prosthesis manufacturing method according to claim 1 or 2, **characterized in that** the dental prosthesis is manufactured in at least two steps, wherein, in one step, a positive model (12) of the dental arch is generated by 3D printing, is cast with casting material to form a casting mold, a casting mold is boiled off, and dental arch material is injected into the casting mold thus generated.

4. The dental prosthesis manufacturing process according to one of the preceding claims, **characterized in that**, in another step, a positive model of the dental arch required for the prosthesis is additively established, is placed onto the denture base (26) previously produced, cast, a hardened casting mold is removed and the resulting negative casting mold for the dental arch is used at least as a part of the negative mold for the injection of the dental arch, thus in particular performing the injection in 2 steps so that first dentine material and then cutting material is injected.

5. The dental prosthesis manufacturing method according to claim 4, **characterized in that** another part of the negative mold of a mold for injecting the dental arch is a gingival part of the finished injection molded prosthesis base (26).

6. The dental prosthesis manufacturing method according to one of the preceding claims, **characterized in that** a demolding of the prosthesis base (26) is carried out together with a demolding of the teeth or the dental arch following polymerization of the prosthesis base and the dental arch to each other, or **in that** they are bonded to each other.

7. The dental prosthesis manufacturing process according to one of the preceding claims, **characterized in that** a positive model is made of a dimensionally stable, 3D printing material, in particular mono(meth)acrylates or di(meth)acrylates, which can be processed in a stereolithography device or an MJM device and in particular are easily removable.

8. The dental prosthesis manufacturing method according to one of the preceding claims, **characterized in that** a positive model made of wax or thermoplastics is manufactured in a 3D printer (e.g. FDM type, stereolithography printer or according to the MJM method) and/or is manufactured using an FDM filament printer and polylactides, PP, PE, ABS, PETG and/or filled filaments are used as plastic material.

9. The dental prosthesis manufacturing process according to one of the following claims, **characterized in that** injection of the prosthesis material, the prosthesis base material and/or the dental arch material is done using an injector, or another injection molding device having an air outlet which automatically closes when the material impinges thereon.

10. The dental prosthesis manufacturing method according to one of the preceding claims, **characterized in that** a dental arch material is filled with prepolymer fillers, inorganic fillers or inorganically filled polymer fillers.

## Revendications

1. Procédé de fabrication de prothèses dentaires, où la prothèse dentaire est une prothèse complète ou une prothèse partielle et la prothèse dentaire comprend une base et une couronne dentaire, où un modèle positif (14) de la base à fabriquer est produit de manière additive, puis le modèle positif de la base à fabriquer est enrobé d'une masse de scellement durcissant (26), en particulier du plâtre, où, dans une autre étape, après le durcissement de la masse de scellement, le modèle positif de la base à fabriquer est retiré, en particulier est retiré par l'action de la chaleur, de sorte qu'il reste un moule négatif de la base à fabriquer, et où le moule négatif de la base ainsi réalisé est rempli de matériau de base de prothèse et le matériau de base de prothèse est durci, où un modèle positif respectif (12, 14) pour la couronne dentaire et la base est produit par impression 3D et, en particulier ensuite, la base (26) est produite, en particulier par injection, où le modèle positif de la couronne dentaire1(12) est ensuite appliqué sur la base (26) et noyé avec celle-ci dans une masse de scellement durcissante, et dans une autre étape, après le durcissement de la masse de scellement, le modèle positif de la couronne dentaire (12) est retiré, de sorte qu'une forme négative de la couronne dentaire à fabriquer est obtenue et la forme négative ainsi obtenue de la couronne dentaire à fabriquer est remplie de matériau de couronne dentaire par injection.

2. Procédé de fabrication de prothèses dentaires selon la revendication 1, **caractérisé en ce que** la fabrication de la prothèse dentaire est effectuée en au moins deux étapes, où, dans une étape, un modèle positif (14) de la base de la prothèse est produit par impression 3D, est coulé avec du matériau de coulée pour former un moule de coulée, le moule de coulée est ébouillanté, et du matériau de base de la prothèse est injecté dans le moule de coulée ainsi produit.

3. Procédé de fabrication de prothèses dentaires selon la revendication 1 ou 2, **caractérisé en ce que** la fabrication de la prothèse dentaire est effectuée en au moins deux étapes, où, dans une étape, un modèle positif (12) de la couronne dentaire est produit par impression 3D, est coulé avec du matériau de coulée pour former un moule de coulée, un moule de coulée est ébouillanté, et du matériau de couronne dentaire est injecté dans le moule de coulée ainsi produit.

4. Procédé de fabrication de prothèses dentaires selon l'une des revendications précédentes, **caractérisé en ce que**, dans une autre étape, un modèle positif de la couronne dentaire nécessaire pour la prothèse est créé par addition, est placé sur la base de prothèse (26) fabriquée auparavant, est coulé, un moule de coulée durci est retiré et le moule de coulée - négatif - ainsi obtenu pour la couronne dentaire est utilisé au moins comme partie du moule négatif pour l'injection de la couronne dentaire, l'injection s'effectuant en particulier en deux étapes, de sorte que la masse de dentine est d'abord injectée et ensuite la masse d'incisal.

5. Procédé de fabrication de prothèses dentaires selon la revendication 4, **caractérisé en ce qu'**une autre partie du moule négatif pour l'injection de la couronne dentaire est une partie gingivale de la base de prothèse (26) injectée à la fin.

6. Procédé de fabrication de prothèses dentaires selon l'une quelconque des revendications précédentes, **caractérisé en ce qu'**un démoulage de la base de prothèse (26) est effectué en même temps qu'un démoulage des dents ou de la couronne dentaire, après que la base de prothèse et la couronne dentaire aient été polymérisées l'une contre l'autre, ou qu'elles aient été collées ensemble.

7. Procédé de fabrication de prothèses dentaires selon l'une quelconque des revendications précédentes, **caractérisé en ce qu'**un modèle positif est fabriqué à partir d'un matériau d'impression 3D indéformable, en particulier à partir de mono(méth)acrylates ou de di(méth)acrylates qui peuvent être traités dans un appareil de stéréolithographie ou un appareil MJM et qui sont en particulier faciles à enlever.

8. Procédé de fabrication de prothèses dentaires selon l'une des revendications précédentes, **caractérisé en ce qu'**un modèle positif en cire ou en thermoplastique est fabriqué dans une imprimante 3D (par exemple de type FDM, imprimante stéréolithographique ou selon le procédé MJM) et/ou est fabriqué avec une imprimante à filaments FDM et **en ce que** des polylactides, PP, PE, ABS, PETG et/ou des filaments chargés sont utilisés comme matériau plastique.

9. Procédé de fabrication de prothèses dentaires selon l'une quelconque des revendications suivantes, **caractérisé en ce que** l'injection du matériau de la prothèse, du matériau de la base de la prothèse et/ou du matériau de la couronne dentaire est effectuée par un injecteur ou un autre dispositif de moulage par injection comportant une sortie d'air qui se ferme automatiquement lors de l'impact du matériau.

10. Procédé de fabrication de prothèses dentaires selon l'une quelconque des revendications précédentes, **caractérisé en ce qu'**un matériau de couronne dentaire est chargé avec des charges prépolymères, des charges inorganiques ou des charges polymères chargées inorganiques.
